# FASCICULE DE BREVET EUROPEEN

(11) **EP 2 119 293 B1**
(45) Date de publication et mention de la délivrance du brevet: **22.09.2010**
(21) Numéro de dépôt: 07872457.2
(22) Date de dépôt: 28.12.2007
(51) Int. Cl.: H04W 4/00

(54) **PROCÉDÉ ET DISPOSITIF POUR CONTRÔLER L'EXÉCUTION D'AU MOINS UNE FONCTION DANS UN MODULE DE COMMUNICATION SANS FIL DE COURTE PORTÉE D'UN APPAREIL MOBILE**
VERFAHREN UND EINRICHTUNG ZUR STEUERUNG DER AUSFÜHRUNG MINDESTENS EINER FUNKTION IN EINEM DRAHTLOSEN KOMMUNIKATIONSMODUL KURZER REICHWEITE EINES MOBILTELEFONS
METHOD AND DEVICE FOR CONTROLLING THE EXECUTION OF AT LEAST ONE FUNCTION IN A SHORT RANGE WIRELESS COMMUNICATION MODULE OF A MOBILE PHONE

(30) Priorité: 12.02.2007 FR 0753202
(43) Date de publication de la demande: 18.11.2009
(73) Titulaire: OBERTHUR TECHNOLOGIES, 92300 Levallois-Perret (FR)
(72) Inventeur: BERTIN, Marc, F-78720 La Celle les Bordes (FR)
(74) Mandataire: Imbert de Tremiolles, Ghislain
(86) Numéro de dépôt international: PCT/FR2007/002183
(87) Numéro de publication internationale: WO 2008/102081

(56) Documents cités:
- EP-A- 1 701 559
- WO-A-01/45319
- WO-A-2005/096651
- US-A1- 2004 029 563

## Description

La présente invention concerne le domaine du contrôle d'exécution de fonctions et plus particulièrement les mécanismes d'autorisation et d'interdiction d'exécution d'au moins une fonction dans un module de communication sans fil de courte portée d'un appareil mobile selon un identifiant de l'appareil mobile.

Alors que certains services sont proposés sans restriction aux possesseurs d'appareils mobiles, éventuellement sous réserve que ces appareils disposent de certaines caractéristiques techniques particulières pour mettre en oeuvre ces services, il existe de nombreux services qui ne sont accessibles qu'à certains utilisateurs ou à certains appareils mobiles, par exemple des utilisateurs ayant souscrit des contrats ou abonnements particuliers.

A titre d'illustration, les opérateurs téléphoniques financent souvent l'achat de téléphones mobiles des souscripteurs, moyennent un engagement pour le souscripteur de rester abonner un certain temps. Pour éviter que ce contrat ne soit contourné, les téléphones mobiles sont généralement bloqués pendant la durée de l'engagement de façon à ce qu'ils ne soient utilisables que sur les réseaux de téléphonie mobile autorisés par l'opérateur téléphonique. Un tel mécanisme peut être mise en oeuvre par le fournisseur de la carte du souscripteur à l'aide, par exemple, d'informations contenues dans une carte SIM *(Subscriber Identity Module)* conforme à une norme GSM ou 3G. Il s'agit en générale d'une méthode de blocage logicielle pouvant être relativement aisément contournée par un fraudeur, le système d'exploitation informatique du téléphone étant peu ou pas protégé.

De façon similaire, la demande de brevet américain US 2006/0112275 décrit un verrou matériel *(dongle)* dans un procédé pour contrôler les communications entre une carte SIM, par exemple du type utilisé dans un téléphone GSM, et un ordinateur, par exemple du type PC *(Personal Computer).* La carte SIM peut être authentifiée par le réseau téléphonique, de la même façon qu'une carte SIM d'un téléphone mobile est authentifiée par le réseau téléphonique, permettant ainsi d'authentifier l'utilisateur de l'ordinateur. Cette authentification peut permettre l'usage de l'ordinateur pour une durée limitée pour utiliser, par exemple, une application particulière chargée dans l'ordinateur après authentification. L'application peut être chargée dans l'ordinateur par un tiers après et en réponse à une authentification. Des frais peuvent être imputés à l'utilisateur par le réseau de communication et transmis au tiers. Le verrou matériel fourni des moyens de sécurité additionnels pour les données d'authentification mémorisées dans la carte SIM par l'usage d'un code PIN *(Personnal Identification Number)* devant être entrée et/ou en réponse à des requêtes de l'ordinateur, encryptées à l'aide d'une clé, ces requêtes étant générées par une interface particulière de l'ordinateur. Un autre exemple peut être trouvé dans le document EP 1 701 559 (SONY CORP) 13 Septembre 2006.

Il existe ainsi des besoins pour permettre de contrôler l'accès à certains services à partir d'un appareil, de préférence un appareil mobile, selon certaines caractéristiques d'une carte d'identification comme une carte SIM.

L'invention offre une alternative aux moyens d'authentification permettant l'accès à certains services selon certaines caractéristiques d'une carte d'identification permettant la mise en oeuvre du principe de blocage et de déblocage à de nouvelles applications.

L'invention a ainsi pour objet un procédé de contrôle d'exécution d'au moins une fonction dans un module de communication sans fil de courte portée d'un appareil mobile adapté à recevoir des moyens d'identification, ce procédé comprenant les étapes suivantes,
- transmission d'une requête d'information par ledit module de communication sans fil de courte portée auxdits moyens d'identification, ladite requête d'information visant l'obtention d'au moins une information caractéristique desdits moyens d'identification ;
- réception d'une réponse à ladite requête d'information desdits moyens d'identification, ladite réponse comprenant au moins une information caractéristique desdits moyens d'identification ;
- authentification de ladite réponse par ledit module de communication sans fil de courte portée ; et,
- si ladite réponse est authentifiée, exécution de ladite au moins une fonction en réponse à ladite au moins une information caractéristique desdits moyens d'identification.

Le procédé selon l'invention permet ainsi d'autoriser ou de refuser l'exécution de fonctions dans un module de communication sans fil de courte portée selon des caractéristiques d'une carte d'identification. En particulier, l'autorisation ou le refus d'exécution d'une fonction peut être lié à l'opérateur dont dépend la carte d'identification.

Selon un mode de réalisation particulier, le procédé comprend en outre les étapes suivantes,
- réception d'une requête d'authentification par ledit module de communication sans fil de courte portée ; et,
- si ladite réponse est authentifiée, transmission par ledit module de communication sans fil de courte portée d'une autorisation à ladite requête d'authentification, en réponse à ladite au moins une information caractéristique desdits moyens d'identification, avant l'exécution de ladite au moins une fonction.

Selon ce mode de réalisation, le procédé selon l'invention permet d'autoriser ou de refuser l'exécution de fonctions dans un module de communication sans fil de courte portée selon des caractéristiques d'une carte d'identification lorsque les fonctions sont liées à un dispositif externe. Ce mode de réalisation permet notamment de contrôler l'accès à certains services.

Toujours selon un mode de réalisation particulier, la transmission d'information entre lesdits moyens d'identification et ledit module de communication sans fil de courte portée est au moins partiellement réalisée à travers un microprocesseur de ladite unité dudit appareil mobile, le procédé comprenant les étapes suivantes,
- transmission de ladite requête d'information audit microprocesseur, ledit microprocesseur étant adapté à transmettre ladite requête d'information auxdits moyens d'identification ; et/ou,
- réception de ladite réponse dudit microprocesseur, ledit microprocesseur ayant reçu ladite réponse desdits moyens d'identification.

Ce mode de réalisation permet d'utiliser l'architecture de l'appareil mobile dans lequel l'invention est mise en oeuvre tout en offrant un niveau de sécurité élevé.

Au moins l'une desdites réponse et autorisation est avantageusement codée ou sécurisée pour être authentifiable et ainsi éviter que la réponse ou l'autorisation ne soit simulé par un programme frauduleux.

Toujours selon un mode de réalisation particulier, ledit codage ou ladite sécurisation d'au moins l'une desdites réponse et autorisation est réalisé à partir d'informations d'authentification mémorisées localement dans lesdits moyens d'identification ou dans ledit module de communication sans fil de courte portée codant ou sécurisant ladite au moins l'une desdites réponse et autorisation afin d'améliorer la sécurité du procédé. Lesdites informations d'authentification peuvent être, en particulier, une clé cryptographique privée.

Toujours selon un mode de réalisation particulier, ledit codage ou ladite sécurisation d'au moins l'une desdites réponse et autorisation est réalisé localement dans lesdits moyens d'identification ou dans ledit module de communication sans fil de courte portée codant ou sécurisant ladite au moins l'une desdites réponse et autorisation à partir d'information d'authentification mémorisées localement dans lesdits moyens d'identification ou dans ledit module de communication sans fil de courte portée codant ou sécurisant ladite au moins l'une desdites réponse et autorisation pour augmenter la sécurité du procédé.

Afin de diminuer le risque de fraude, ledit module de communication sans fil de courte portée est au moins partiellement sécurisé.

La fonction exécutée par ledit module de communication sans fil de courte portée consiste, selon un mode de réalisation particulier, à mettre à jour des données mémorisées dans ledit module de communication sans fil de courte portée. Le procédé selon l'invention évite ainsi que les données mémorisées ne soient remplacées frauduleusement par d'autres.

La fonction exécutée par ledit module de communication sans fil de courte portée peut également consister à autoriser un mode de communication sans fil, vers ou depuis un dispositif externe, dudit module de communication sans fil de courte portée pour contrôler les communications.

La fonction exécutée par ledit module de communication sans fil de courte portée peut aussi avoir pour objet l'accès à au moins un service proposé par un dispositif externe. Le procédé selon l'invention permet ainsi de contrôler l'accès à des services proposés selon une carte d'identification permettant ainsi notamment de limiter l'accès à ces services à certains types d'opérateur ou à certains types de contrat.

Selon un mode de réalisation particulier, au moins certaines des communications entre lesdits moyens d'identification et ledit module de communication sans fil de courte portée sont des communications sécurisées.

Toujours selon un mode de réalisation particulier, ladite requête d'information comprend une indication relative à ladite au moins une fonction pour autoriser ou interdire certaines fonctions de façon sélective.

L'invention a aussi pour objet un programme d'ordinateur comprenant des instructions adaptées à la mise en oeuvre de chacune des étapes du procédé décrit précédemment.

L'invention a également pour objet un moyen de stockage d'informations, amovible ou non, partiellement ou totalement lisible par un ordinateur ou un microprocesseur comportant des instructions de code d'un programme d'ordinateur pour l'exécution de chacune des étapes du procédé décrit précédemment.

L'invention a aussi pour objet un dispositif de contrôle pour l'exécution d'au moins une fonction dans des moyens de communication sans fil de courte portée d'un appareil mobile adapté à recevoir des moyens d'identification, ce dispositif étant caractérisé en ce qu'il comprend les moyens suivants,
- moyens pour transmettre au moins une requête d'information auxdits moyens d'identification, ladite requête d'information visant l'obtention d'au moins une information caractéristique desdits moyens d'identification ;
- moyens pour recevoir une réponse à ladite requête d'information desdits moyens d'identification, ladite réponse comprenant au moins une information caractéristique de ladite carte d'identification ;
- moyens pour authentifier ladite réponse ; et,
- moyens pour exécuter ladite au moins une fonction en réponse à ladite au moins une information caractéristique de ladite carte d'identification.

Le dispositif selon l'invention permet ainsi d'autoriser ou de refuser l'exécution de fonctions dans un module de communication sans fil de courte portée selon des caractéristiques d'une carte d'identification. En particulier, l'autorisation ou le refus d'exécution d'une fonction peut être lié à l'opérateur dont dépend la carte d'identification.

Selon un mode de réalisation particulier, ledit appareil mobile comprend un microprocesseur différent desdits moyens d'authentification et desdits moyens d'exécution de telle sorte qu'une faille de sécurité dudit microprocesseur n'affecte pas la sécurité du dispositif.

Le dispositif comprend en outre avantageusement les moyens suivants,
- moyens pour recevoir au moins une requête d'authentification ; et,
- moyens pour transmettre une autorisation à ladite requête d'authentification en réponse à ladite au moins une information caractéristique de ladite carte d'identification, avant l'exécution de ladite au moins une fonction.

Selon ce mode de réalisation, le dispositif selon l'invention permet d'autoriser ou de refuser l'exécution de fonctions dans un module de communication sans fil de courte portée selon des caractéristiques d'une carte d'identification lorsque les fonctions sont liées à un dispositif externe. Ce mode de réalisation permet notamment de contrôler l'accès à certains services.

Le dispositif comprend en outre avantageusement des moyens de codage ou de sécurisation adaptés à coder ou à sécuriser ladite autorisation de telle sorte que ladite autorisation soit authentifiable pour éviter que ladite autorisation ne soit simulée par un programme frauduleux.

Selon un mode de réalisation particulier, le dispositif comprend en outre des moyens de mémorisation pour mémoriser des informations d'authentification utilisées par lesdits moyens de codage ou de sécurisation pour coder ou sécuriser ladite autorisation afin d'améliorer la sécurité du dispositif. Lesdits moyens de mémorisation sont avantageusement non volatiles. De façon avantage, lesdits moyens de mémorisation sont adaptés à mémoriser en outre des données permettant d'authentifier ladite réponse.

Toujours selon un mode de réalisation particulier, les moyens d'identification sont une carte d'identification de souscripteur à un réseau de téléphonie mobile telle qu'une carte SIM couramment utiliser dans les unités de téléphonie mobile.

Toujours selon un mode de réalisation particulier, lesdits moyens de communication sans fil de courte portée sont conformes à la norme ISO 14443.

Toujours selon un mode de réalisation particulier, lesdits moyens de communication dans fil de courte portée sont intégrés audit appareil mobile de façon inamovible.

D'autres avantages, buts et caractéristiques de la présente invention ressortent de la description détaillée qui suit, faite à titre d'exemple non limitatif, au regard des dessins annexés dans lesquels :
- la figure 1, comprenant les figures 1a et 1b, illustre un exemple de carte à microcircuit pour une communication sans fil de courte portée ;
- la figure 2, comprenant les figures 2a et 2b, illustre un exemple de mise en oeuvre de l'invention avec une carte à microcircuit similaire à celle représentée sur la figure précédente et avec un module de type NFS, respectivement, pour une application de téléphonie mobile ;
- la figure 3 montre un exemple de mise en oeuvre de l'invention dans une unité de téléphonie mobile ; et,
- la figure 4 est une représentation schématique d'un exemple d'algorithme mettant en oeuvre l'invention selon le dispositif présenté sur la figure 3.

L'invention concerne plus spécifiquement la mise en oeuvre d'appareils mobiles tels que les unités de téléphonie mobile apte à communiquer par un réseau global de communication sans fil tel qu'un réseau de type GMS ou UMTS, ou par un réseau local tel qu'un réseau WiFi. L'invention peut également être mise en oeuvre à l'aide d'autres dispositifs mobiles tels que les assistants personnels aussi connus sous le nom de PDA *(Personal Digital Assistant).* Selon l'invention, les appareils mobiles comprennent des moyens de communication sans fil à courte portée, par exemple, d'une portée inférieure à un mètre, à cinquante centimètres ou à vingt centimètres et un module d'identification tel qu'un module d'identification au réseau de communication sans fil comme une carte SIM.

L'invention tire parti des nouvelles technologies de communications sans fils à courte portée qui peuvent être intégrées dans les appareils mobiles. La technologie NFS *(Near Field Communication)* offre par exemple des moyens de connexions sans fil de courte portée pour des applications d'identification, d'échange de données ou de paiements. Opérant généralement à une fréquence de 13,56 MHz et permettant un taux de transfert de données allant jusqu'à 424 KBits/s, la technologie NFC propose une communication simple et sûre des données entre des dispositifs électroniques.

Selon l'invention, de tels moyens de communication sans fil de courte portée sont munis d'un contrôleur dont l'accès est plus restreint ou plus sûr que le processeur et le système d'exploitation des unités téléphoniques mobiles dans lesquelles ils sont installés, qui offrent la possibilité d'installer des logiciels ou d'accéder à la mémoire. Cet aspect est mis en oeuvre par l'invention pour assurer une fonctionnalité de blocage et de déblocage, partiel ou total, des moyens de communication sans fil à courte portée, plus résistante aux attaques, autorisant ces moyens à ne communiquer qu'en présence d'une carte SIM d'un opérateur spécifique dans le but d'autoriser ou d'interdire l'exécution de certaines fonctions au sein de ces moyens de communication et/ou l'accès à certains services proposés.

Ces moyens de communication sans fil de courte portée peuvent se présenter sous la forme d'une carte à microcircuit comportant une antenne dans son corps ou déportée. Une telle carte est amovible. Alternativement, ces moyens de communication sans fil de courte portée peuvent se présenter sous la forme d'un module fixé au corps du téléphone tel qu'un circuit intégré monté sur circuit imprimé portant l'antenne ou d'un module tel qu'un circuit et une antenne coulé dans du plastique. Un tel module est inamovible.

Selon un premier mode de réalisation, ces moyens de communication sans fil de courte portée comprennent par exemple un corps sensiblement rigide tel qu'un corps en matière plastique, avec un microcircuit, et un film souple comprenant une antenne connectée au microcircuit, où l'antenne portée par le film peut s'étendre au moins partiellement au-delà du corps. Un exemple d'entité électronique adaptée à incorporer un tel dispositif concerne les mini cartes, par exemple au format ID-000. Il peut s'agir de carte à puce, c'est-à-dire de cartes à microcircuit conformes à la norme ISO-7816, dont l'épaisseur est d'environ 0,76mm et comportant un microcontrôleur sécurisé.

Il peut également s'agir de carte conforme à d'autres formats tels que le format MMC *(MultiMedia Card),* le format RS-MMC *(Reduced-Size MultiMedia Card)* ou le format UICC *(Universal Integrated Circuit Caral).*

La carte à microcircuit est préférentiellement adaptée à communiquer conformément à la norme ISO 14443 à une fréquence d'environ 13,56 Mhz.

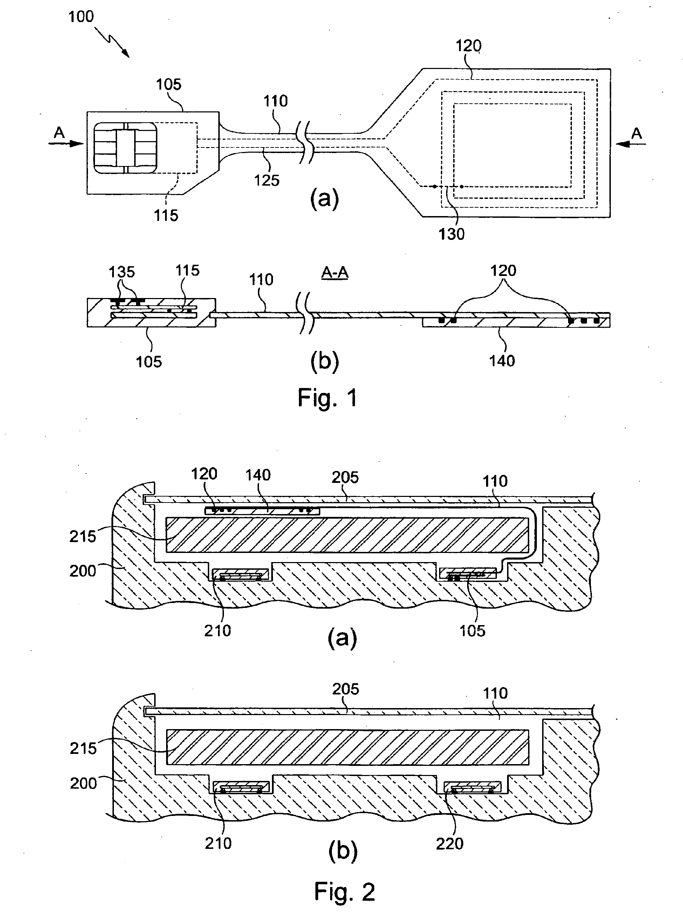

La figure 1, comprenant les figures 1a et 1b, illustre un exemple de carte à microcircuit pour des moyens de communication sans fils de courte portée. La figure 1a est une vue de dessus de la carte à microcircuit tandis que la vue 1 b est une vue en coupe selon le repère A-A.

Cette carte comprend un corps de carte sensiblement rigide 105 et un film souple 110 sur lequel est formé une antenne 120. Un microcircuit 115 est intégré dans le corps 105 de carte. Le circuit 115 peut être par exemple un circuit comprenant un microprocesseur de communication sécurisée et une mémoire adaptée à stocker un programme et des clés de codage. Selon un mode de réalisation particulier, le circuit 115 comprend de moyens de communication par contact pour échanger des données avec l'unité de téléphonie mobile à laquelle elle est connectée et des moyens de communication sans contact pour échanger des données avec un dispositif électronique externe.

Le film 110 comprend avantageusement trois parties, la première étant liée au corps pour établir un contact entre le circuit 115 et l'antenne 120, la seconde comprenant avantageusement deux pistes 125 étant utilisée pour relier l'antenne 120 au corps 105 de carte et la troisième servant de support à l'antenne 120 comprenant un pont 130

Comme illustré sur la figure 1b, le corps 105 de carte comprend le circuit 115 relié à des connecteurs 135 affleurant la surface du corps 105 de la carte, permettant d'établir une jonction électrique avec un appareil mobile adapté lorsque celle-ci est introduite dans cet appareil mobile. Le circuit 115 est également relié aux pistes conductrices 125 du film 110. L'antenne 120 est de préférence protégée par une couche isolante 140, formant un dispositif adapté à maintenir par pression l'antenne 120 selon une position prédéfinie. Le film 110 est de préférence réalisé en matière plastique telle que du nylon ou du PVC, c'est-à-dire un matériau souple et résistant.

La figure 2a illustre un exemple d'utilisation d'une carte de communication sans fil de courte portée, similaire à celle représentée sur la figure 1, pour une application de téléphonie mobile. Le corps 200 de l'unité de téléphonie mobile comprend une triple cavité adaptée à recevoir une carte à microcircuit, par exemple une carte SIM standard, une carte de communication sans fil de courte portée et une batterie. La triple cavité est protégée par un capot 205. La partie de la cavité adaptée à recevoir une carte à microcircuit 210 comprend de préférence des connecteurs de telle sorte que lorsque la carte à microcircuit est en place, il y ait un couplage électrique entre le téléphone et la carte à microcircuit. La carte à microcircuit peut être maintenue par un système de verrouillage standard (non représenté). De même la partie de la cavité adaptée à recevoir une carte 105 de communication sans fil de courte portée comprend de préférence des connecteurs de telle sorte que lorsque la carte 105 est en place, il y ait un couplage électrique entre le téléphone et la carte. La carte 105 peut également être maintenue par un système de verrouillage standard (non représenté). Ainsi, lorsque le corps de la carte 105 est mis en place dans la cavité, un couplage électrique est réalisé entre le téléphone et le circuit 115. Le film 110 est de préférence positionné le long de la batterie 215 de telle sorte que l'antenne 120 soit disposé entre la batterie 215 et le capot 205, comme illustré.

Le positionnement de l'antenne 120 entre la batterie 215 et le capot 205 permet au circuit 115 d'échanger des données, sans contact, avec un émetteur/récepteur adapté, en limitant les effets parasitiques liés au corps 200 du téléphone et à la batterie 215.

Alternativement, selon un second mode de réalisation, comme illustré sur la figure 2b, un module 220 de communication sans fil de courte portée peut être utilisé à la place de la carte 100 de la figure 2a. Le module 220 comprend alors les mêmes éléments que la carte 100, intégré un composant connecté au corps du téléphone 200. La connexion du module 220 peut être réalisée mécaniquement ou par soudure, le module 220 est donc typiquement inamovible.

Dans la suite de la description, le terme de module de communication sans fil de courte portée désigne indifféremment les cartes ou les composants ayant les caractéristiques du module 220 ou de la carte 100, qui sont similaires

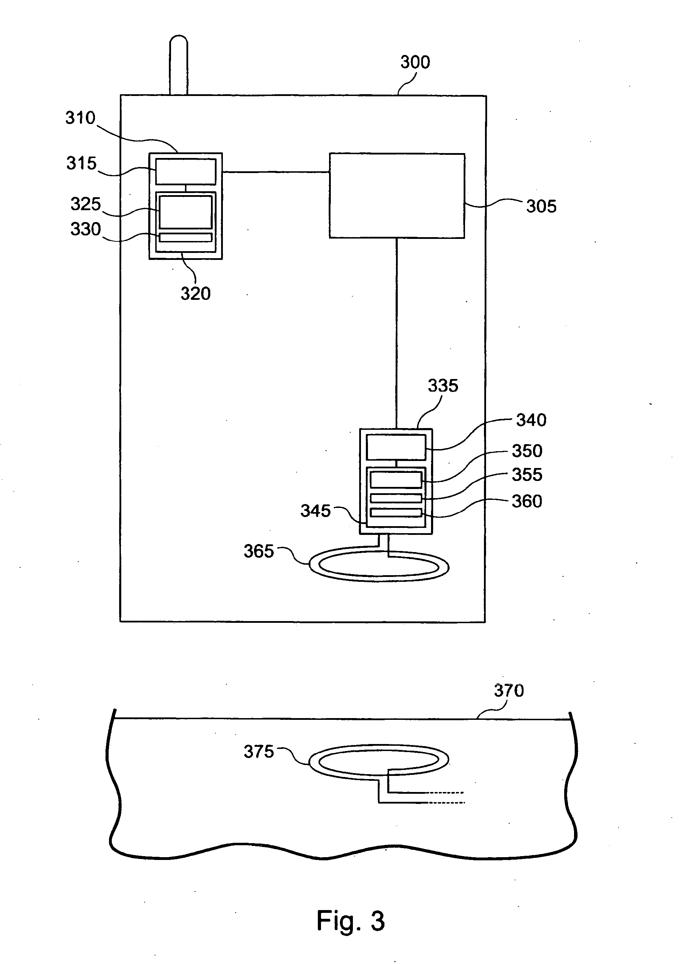

La figure 3 illustre un exemple de mise en oeuvre de l'invention dans une unité de téléphonie mobile 300. Comme représenté, l'unité de téléphonie mobile 300 comprend un microprocesseur principal 305 utilisé pour la mise en oeuvre des applications courantes de téléphonie mobile et, éventuellement, d'applications telles que des applications de type PIM *(personal information manager)* ou des jeux.

L'unité de téléphonie mobile 300 comprend également une carte d'identification telle qu'une carte SIM 310. La carte d'identification 310 est ici une carte SIM standard comprenant un microprocesseur 315, de préférence sécurisé, et une mémoire 320. La mémoire 320 est avantageusement adaptée à stocker une table 325 contenant par exemple une liste de fonctions ou de services ainsi que les restrictions d'utilisation de ces fonctions ou de ces services. La mémoire 320 est également adaptée à stocker une clé cryptographique permettant de signer des données de telle sorte que l'analyse de ces données signées permette l'authentification de la provenance de ces données. La carte d'identification 310 est reliée au microprocesseur 305 pour permettre l'échange de données entre les microprocesseurs 305 et 315.

L'unité de téléphonie mobile 300 comprend aussi un module 335 de communication sans fil de courte portée. Le module 335 comprend un microprocesseur de communication 340. Le microprocesseur 340 est avantageusement sécurisé et il est de préférence conforme au standard ISO 14443. Le module 335 comprend également une mémoire 345. La mémoire 345 est adaptée à stocker des programmes 350 ainsi que par exemple deux clés cryptographiques 355 et 360. Une première clé 355 est ici adaptée à authentifier la signature de données signées en utilisant la clé 330 contenue dans la mémoire 320 de la carte d'identification 310. La seconde clé 360 permet à la carte 335 de signer des données dont la source peut alors être authentifiée. Le module 335 comprend également une antenne 365 permettant au module 335 de transmettre et de recevoir des données vers et depuis l'extérieur. Dans un souci d'illustration, l'antenne 365 est ici représentée à l'extérieur du module 335. Le module 335 est relié au microprocesseur 305 pour permettre l'échange de données entre les microprocesseurs 305 et 340.

Pour transmettre ou recevoir des données l'antenne 365, reliée au module 335, doit être située à une proche distance d'un dispositif électronique 370 comprenant une antenne 375, adapté à recevoir et à transmettre des données au module 335 de l'unité de téléphonie mobile 300.

Selon un mode de réalisation avantageux, la communication entre le module 335 de communication sans fil de courte portée et la carte d'identification 310 est sécurisée par le module et la carte eux-mêmes, par exemple cryptée, et utilise des méthodes connues de l'homme de l'art pour éviter l'analyse des commandes échangées et leur simulation. Une telle méthode peut consister, par exemple, à utiliser un message crypté et signé contenant un mécanisme de comptage de message. Il convient de noter que les communications entre le module 335 de communication sans fil de courte portée et la carte d'identification 310 peuvent être des communications sans fil.

A titre d'illustration, le dispositif électronique 370 peut être un dispositif adapté à donner certains accès, tels que des accès à des moyens de transport comme le train ou l'avion, à des chambres d'hôtel, à des piscines ou à des théâtres. Le dispositif électronique 370 peut également être adapté à autoriser l'utilisation, temporaire ou non, de certaines applications telles que des jeux ou à autoriser le téléchargement de contenus tels que des contenus multimédia.

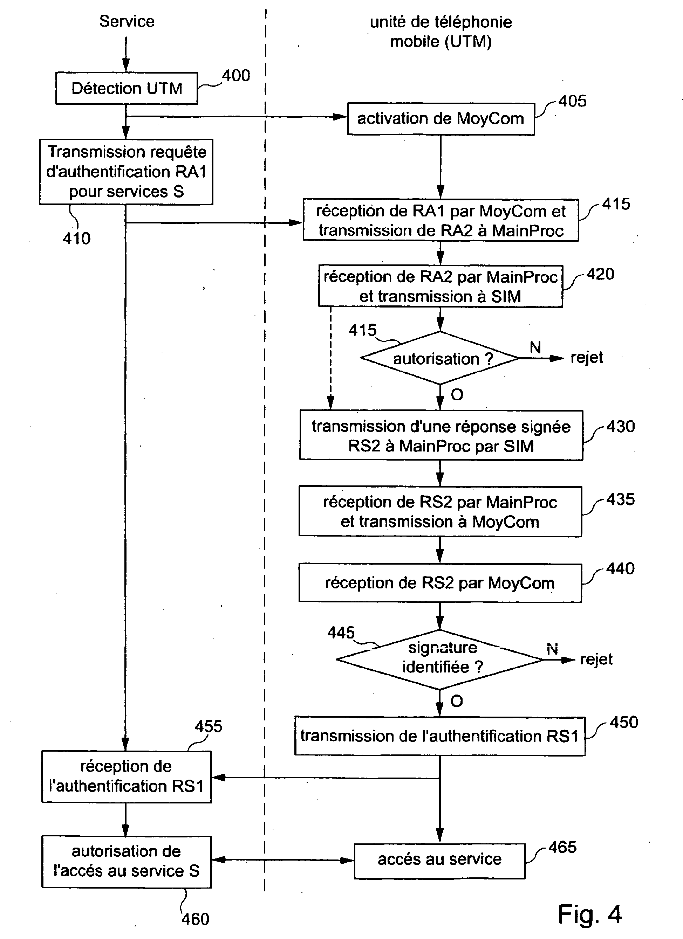

La figure 4 est une représentation schématique d'un exemple d'algorithme mettant en oeuvre l'invention selon le dispositif présenté sur la figure 3 pour accéder à des services selon les caractéristiques de la carte d'identification. Un tel exemple de mise en oeuvre concerne notamment la possibilité d'effectuer un achat, par exemple une place de cinéma ou un billet de train à une borne automatique, le paiement pouvant être effectué par prélèvement sur le compte téléphonique.

Dans un souci de clarté, les étapes situées sur la partie gauche de l'algorithme représenté sur la figure 4 concerne les étapes liées au fournisseur de service tandis que les étapes situées à droite sont liées à l'unité de téléphonie mobile.

Après avoir détecté la présence d'une unité de téléphonie mobile (étape 400), le dispositif électronique 370 émet un signal pour activer le module 335 de communication sans fils de courte portée appelée MoyCom (étape 405). L'activation peut notamment consister à mettre sous tension le module 335. Un tel signal d'activation est, par exemple conforme à la norme 14443. Lorsqu'un signal d'activation a été émis, une communication entre le dispositif électronique 370 et le module 335 est de préférence initialisée.

Le dispositif électronique 370 propose alors l'accès à un ou à plusieurs services, appelés S. A cette fin, le dispositif électronique 370 transmet une requête d'authentification, appelée RA1, comprenant un identifiant de requête et, avantageusement, une identification des services proposés (étape 410) afin d'obtenir l'autorisation d'accès aux services S.

Lorsque le module 335 de communication sans fil de courte portée de l'unité de téléphonie mobile 300 reçoit la requête d'authentification RA1, il en détermine la nature pour déterminer, par exemple, si les services proposés peuvent être mis en oeuvre par l'unité de téléphonie mobile 300. Dans l'affirmative, le module 335 transmet une requête d'information, appelée RA2 au microprocesseur 305, appelé MainProc, de l'unité de téléphonie mobile 300 (étape 415). La requête RA2 a pour objet d'obtenir l'autorisation de la carte d'identification 310 d'utiliser les services proposés ou de déterminer si l'accès à ces services n'est pas interdit. La requête RA2 peut ainsi, par exemple, contenir un identifiant des services proposés pour obtenir en retour une autorisation ou un refus. Alternativement, la requête RA2 peut contenir une simple demande d'identité de la carte d'identification afin que le module 335 soit en mesure de déterminer si, selon l'identité de la carte d'identification, l'accès aux services proposés est autorisé. Lorsque le microprocesseur 305 reçoit la requête d'authentification RA2, il la transmet à la carte d'identification 310 appelée SIM (étape 420). Le microprocesseur 305 peut également afficher un message sur l'écran du téléphone, ou émettre un signal sonore ou visuel, indiquant par exemple que l'utilisateur doit saisir un code de validation.

Après avoir reçu la requête d'authentification RA2, la carte d'identification 310 vérifie si l'accès aux services associés à la requête d'authentification est autorisé en comparant l'identifiant des services proposés aux informations préalablement mémorisées dans la table 325 (étape 425). Il convient de noter ici que l'identifiant des services proposés peut être associé à un service, à un ensemble de services liés entre eux ou à un ensemble de services dont l'accès peut être autorisé ou refusé au cas par cas. Il peut donc s'agir d'un seul identifiant ou d'un ensemble d'identifiant. La table 325 peut contenir, par exemple, une liste d'identifiants de services autorisés et une liste d'identifiants de services autorisés. Si l'accès aux services n'est pas autorisé, la requête est rejetée. Dans ce cas, la carte d'identification peut ne pas retourner de message (comme illustré) ou retourner un message avec une indication de rejet.

Si l'accès aux services est autorisé, la carte d'identification retourne un message d'acceptation, appelé RS2, au microprocesseur 305 de l'unité de téléphonie mobile 300 (étape 430). Le message d'acceptation est de préférence signé à l'aide de la clé mémorisée en 330 pour éviter que ce message ne soit simulé par le microprocesseur 305 sur lequel aurait été installé un programme frauduleux. A la réception du message d'acceptation signé RS1, le microprocesseur 305 le retransmet au module 335 (étape 435). Si un code de validation a été saisi par l'utilisateur, ce code peut également être transmis au module 335. Alternativement, à la réception de la requête RA2, la carte d'identification 310 peut retourner, sous forme signée, une ou plusieurs de ses caractéristiques afin que le module 335 soit en mesure de déterminer l'autorisation d'accéder ou non aux services proposés. Cette alternative est illustrée en pointillé.

Après avoir reçu le message d'acceptation signé RS2 (étape 440), le module 335 vérifie la provenance du message d'acceptation signé RS2 à l'aide, par exemple, de la clé mémorisée en 355 (étape 445). Il convient de noter que les clés mémorisées en 330 et 355 sont telles que lorsqu'un message est signé à l'aide de la clé mémorisé en 330, la clé mémorisée en 355 permet de vérifier que le message a bien été signé par la clé mémorisée en 330. De tels algorithmes sont connus de l'homme de l'art, notamment l'algorithme RSA *(Rivest Shamir Adleman).* Selon ce type d'algorithme, la clé mémorisée en 330 est une clé privée et la clé correspondante mémorisée en 355 est une clé publique.

Si l'origine de message d'acceptation signé RS2 n'est pas reconnue, la requête est rejetée. A nouveau dans ce cas, le module 335 peut ne pas retourner de message (comme illustré) ou retourner un message avec une indication de rejet.

Si l'origine de message d'acceptation signé RS2 est reconnue, la requête est acceptée et le module 335 s'authentifie auprès de dispositif électronique 370 en transmettant un message d'authentification RS1 utilisant la clé mémorisée en 360 (étape 450). La clé mémorisée en 360 est, de préférence, une clé privée.

Alternativement, si le message RS2 est authentifié et qu'il contient des informations sur la carte d'identification 310, le module 335 détermine à l'aide de ces informations s'il peut accéder aux services proposés. A nouveau, si le module peut accéder aux services proposés, le module 335 s'authentifie auprès de dispositif électronique 370 en transmettant un message d'authentification RS1 utilisant la clé mémorisée en 360.

A la réception du message d'authentification RS1, le dispositif électronique 370 vérifie la provenance du message d'authentification en utilisant un mécanisme similaire à celui décrit précédemment en utilisant, par exemple, une clé publique correspondant à la clé privée mémorisée en 360. Lorsque le message d'authentification RS1 est reconnu, le dispositif électronique 370 donne accès aux services S à l'unité de téléphonie mobile 300 (étape 460). L'unité de téléphonie mobile 300 peut alors utiliser les services S (étape 465).

La clé cryptographique privée mémorisée dans la carte d'identification peut être commune à plusieurs cartes d'identification. En particulier, chaque opérateur peut utiliser une ou plusieurs clés cryptographiques privées permettant ainsi d'autoriser ou de refuser l'accès à ses abonnés, notamment selon le type d'abonnement.

Il convient de noter que si un système d'authentification par clés est utilisé dans l'exemple de mise en oeuvre de l'invention décrit, l'invention n'est pas limitée à ce mode d'authentification.

Selon un mode de réalisation particulier, le microprocesseur 305 de l'unité de téléphonie mobile 300 peut recevoir par le réseau de télécommunication mobile des programmes ou des mises à jour de programme devant être stockés dans la mémoire 350 du module 335 de communication sans fil de courte portée. Selon ce mode de réalisation, le module 335 n'accepte la mémorisation des programmes ou des mises à jour de programme dans la mémoire 350 que sur autorisation de la carte d'identification 310. Le mécanisme d'autorisation est alors similaire à l'algorithme décrit précédemment, en particulier par référence aux étapes 415 à 445. Selon ce mode de réalisation l'autorisation concerne la fonction de mémorisation et non l'accès à un service proposé.

Toujours selon un mode de réalisation particulier, le module 335 de communication sans fil de courte portée, après avoir été activée, demande une autorisation à la carte d'identification 310 avant d'initier toute communication avec l'entité électronique 370. A nouveau, un tel mécanisme d'autorisation est similaire à l'algorithme décrit précédemment, en particulier par référence aux étapes 415 à 445.

De façon avantageuse, le module 335 est au moins partiellement sécurisé. Une telle sécurisation peut notamment être définie par les normes FIPS *(Federal Information Processing Standards)* ou les critères communs.

Naturellement, pour satisfaire des besoins spécifiques, une personne compétente dans le domaine de l'invention pourra appliquer des modifications dans la description précédente.

## Revendications

1. Procédé de contrôle d'exécution d'au moins une fonction dans un module (335) de communication sans fil de courte portée d'un appareil mobile (300) adapté à recevoir des moyens d'identification (310), ce procédé étant **caractérisé en ce qu'**il comprend les étapes suivantes,
- transmission (420) d'une requête (RA2) d'information par ledit module de communication sans fil de courte portée auxdits moyens d'identification, ladite requête d'information visant l'obtention d'au moins une information caractéristique desdits moyens d'identification ;
- réception (440) d'une réponse (RS2) à ladite requête d'information desdits moyens d'identification, ladite réponse comprenant au moins une information caractéristique desdits moyens d'identification ;
- authentification (445) de ladite réponse par ledit module de communication sans fil de courte portée ; et,
- si ladite réponse est authentifiée, exécution de ladite au moins une fonction en réponse à ladite au moins une information caractéristique desdits moyens d'identification.

2. Procédé selon la revendication 1 **caractérisé en ce qu'**il comprend en outre les étapes suivantes,
- réception (415) d'une requête d'authentification (RA1) par ledit module de communication sans fil de courte portée ; et,
- si ladite réponse est authentifiée, transmission (450) par ledit module de communication sans fil de courte portée d'une autorisation (RS1) à ladite requête d'authentification, en réponse à ladite au moins une information caractéristique desdits moyens d'identification, avant l'exécution de ladite au moins une fonction.

3. Procédé selon la revendication 1 ou la revendication 2 **caractérisé en ce que** la transmission d'information entre lesdits moyens d'identification et ledit module de communication sans fil de courte portée est au moins partiellement réalisée à travers un microprocesseur (305) de ladite unité dudit appareil mobile, le procédé comprenant les étapes suivantes,
- transmission (415) de ladite requête d'information audit microprocesseur, ledit microprocesseur étant adapté à transmettre ladite requête d'information auxdits moyens d'identification ; et/ou,
- réception (440) de ladite réponse dudit microprocesseur, ledit microprocesseur ayant reçu ladite réponse desdits moyens d'identification.

4. Procédé selon l'une quelconque des revendications précédentes **caractérisé en ce qu'**au moins l'une desdites réponse et autorisation est codée ou sécurisée, pour être authentifiable, à partir d'une clé cryptographique privée mémorisée localement dans lesdits moyens d'identification ou dans ledit module de communication sans fil de courte portée codant ou sécurisant ladite au moins l'une desdites réponse et autorisation, ledit codage ou ladite sécurisation d'au moins l'une desdites réponse et autorisation étant réalisé localement dans lesdits moyens d'identification ou dans ledit module de communication sans fil de courte portée codant ou sécurisant ladite au moins l'une desdites réponse et autorisation.

5. Procédé selon l'une quelconque des revendications précédentes **caractérisé en ce que** ladite au moins une fonction a pour objet la mise à jour de données mémorisées dans ledit module de communication sans fil de courte portée ou l'autorisation de communication sans fil, vers ou depuis un dispositif externe, dudit module de communication sans fil de courte portée.

6. Procédé selon l'une quelconque des revendications précédentes **caractérisé en ce qu'**au moins certaines des communications entre lesdits moyens d'identification et ledit module de communication sans fil de courte portée sont des communications sécurisées.

7. Procédé selon l'une quelconque des revendications précédentes **caractérisé en ce que** ladite requête d'information comprend une indication relative à ladite au moins une fonction.

8. Programme d'ordinateur comprenant des instructions adaptées à la mise en oeuvre de chacune des étapes du procédé selon l'une quelconque des revendications 1 à 7.

9. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 7.

10. Dispositif de contrôle pour l'exécution d'au moins une fonction dans des moyens (335) de communication sans fil de courte portée d'un appareil mobile (300) adapté à recevoir des moyens d'identification (310), ce dispositif étant **caractérisé en ce qu'**il comprend les moyens suivants,
- moyens pour transmettre au moins une requête d'information auxdits moyens d'identification, ladite requête d'information visant l'obtention d'au moins une information caractéristique desdits moyens d'identification ;
- moyens pour recevoir une réponse à ladite requête d'information desdits moyens d'identification, ladite réponse comprenant au moins une information caractéristique de ladite carte d'identification ;
- moyens pour authentifier ladite réponse ; et,
- moyens pour exécuter ladite au moins une fonction en réponse à ladite au moins une information caractéristique de ladite carte d'identification.

11. Dispositif selon la revendication 10 **caractérisé en ce que** ledit appareil mobile comprend un microprocesseur différent desdits moyens d'authentification et desdits moyens d'exécution.

12. Dispositif selon la revendication 10 ou la revendication 11 **caractérisé en ce qu'**il comprend en outre les moyens suivants,
- moyens pour recevoir au moins une requête d'authentification ;
- moyens pour transmettre une autorisation à ladite requête d'authentification en réponse à ladite au moins une information caractéristique de ladite carte d'identification, avant l'exécution de ladite au moins une fonction ; et,
- moyens de codage ou de sécurisation adaptés à coder ou à sécuriser ladite autorisation de telle sorte que ladite autorisation soit authentifiable.

13. Dispositif selon la revendication 12 **caractérisé en ce qu'**il comprend en outre des moyens de mémorisation non volatiles pour mémoriser des informations d'authentification utilisées par lesdits moyens de codage ou de sécurisation pour coder ou sécuriser ladite autorisation, lesdits moyens de mémorisation étant adaptés à mémoriser en outre des données permettant d'authentifier ladite réponse.

14. Dispositif selon l'une quelconque des revendications 10 à 13 **caractérisé en ce que** les moyens d'identification sont une carte d'identification de souscripteur à un réseau de téléphonie mobile.

15. Dispositif selon l'une quelconque des revendications 10 à 14 **caractérisé en ce que** lesdits moyens de communication sans fil de courte portée sont conformes à la norme ISO 14443.

16. Dispositif selon l'une quelconque des revendications 10 à 15 **caractérisé en ce que** lesdits moyens de communication dans fil de courte portée sont intégrés audit appareil mobile de façon inamovible.

## Claims

1. Method of controlling execution of at least one function in a wireless near field communication module (335) of a mobile apparatus (300) adapted to receive identification means (310), this method being **characterised in that** it comprises the following steps:
- transmission (420) of an information request (RA2) by said wireless near field communication module to said identification means, said information request aiming to obtain at least one item of information characteristic of said identification means;
- reception (440) of a response (RS2) to said information request from said identification means, said response containing at least one item of information characteristic of said identification means;
- authentication (445) of said response by said wireless near field communication module; and
- if said response is authenticated, execution of said at least one function in response to said at least one item of information characteristic of said identification means.

2. Method according to claim 1, **characterised in that** it further comprises the following steps:
- reception (415) of an authentication request (RA1) by said wireless near field communication module; and
- if said response is authenticated, before execution of said at least one function, transmission (450) by said wireless near field communication module of an authorisation (RS1) to said authentication request in response to said at least one item of information characteristic of said identification means.

3. Method according to claim 1 or claim 2, **characterised in that** the transmission of information between said identification means and said wireless near field communication module is at least partially effected through a microprocessor (305) of said unit of said mobile apparatus, the method comprising the following steps:
- transmission (415) of said information request to said microprocessor, said microprocessor being adapted to transmit said information request to said identification means; and/or
- reception (440) of said response from said microprocessor, said microprocessor having received said response from said identification means.

4. Method according to any one of the preceding claims, **characterised in that** at least one of said response and said authorisation is coded or secured, so that it can be authenticated, on the basis of a private cryptographic key stored locally in said identification means or in said wireless near field communication module, coding or securing said at least one of response and said authorisation, said coding or said securing of at least one of said response and said authorisation being effected locally in said identification means or in said wireless near field communication module, coding or securing said at least one of said response and said authorisation.

5. Method according to any one of the preceding claims, **characterised in that** the object of said at least one function is to update data stored in said wireless near field communication module, or to authorise wireless communication to or from an external device by said wireless near field communication module.

6. Method according to any one of the preceding claims, **characterised in that** at least some communication between said identification means and said wireless near field communication module is secure.

7. Method according to any one of the preceding claims, **characterised in that** said information request includes an indication relating to said at least one function.

8. Computer program comprising instructions adapted to execute each of the steps of the method according to any of claims 1 or 7.

9. Removable or non-removable information storage means partly or totally readable by a computer or a microprocessor and containing code instructions of a computer program for the execution of each of the steps of the method according to any one of claims 1 to 7.

10. Control device for the execution of at least one function in wireless near field communication means (335) of a mobile apparatus (300) adapted to receive identification means (310), this device being **characterised in that** it comprises the following means:
- means for transmitting at least one information request to said identification means, said information request aiming to obtain at least one item of information characteristic of said identification means;
- means for receiving a response to said information request from said identification means, said response including at least one item of information characteristic of said identification card;
- means for authenticating said response; and
- means for executing said at least one function in response to said at least one item of information characteristic of said identification card.

11. Device according to claim 10, **characterised in that** said mobile apparatus comprises a microprocessor separate from said authentication means and said execution means.

12. Device according to claim 10 or claim 11, **characterised in that** it further comprises the following means:
- means for receiving at least one authentication request;
- means for transmitting an authorisation to said authentication request in response to said at least one item of information characteristic of said identification card before the execution of said at least one function; and
- coding or securing means adapted to code or secure said authorisation so that said authorisation can be authenticated.

13. Device according to claim 12, **characterised in that** it further comprises nonvolatile storage means for storing authentication information used by said coding or securing means to code or secure said authorisation, said storage means being adapted also to store data for authenticating said response.

14. Device according to any one of claims 10 to 13, **characterised in that** the identification means are an identification card of a mobile telephone network subscriber.

15. Device according to any one of claims 10 to 14, **characterised in that** said wireless near field communication means conform to the ISO 14443 standard.

16. Device according to any one of claims 10 to 15, **characterised in that** said wireless near field communication means are integrated into said mobile apparatus non-removably.

## Patentansprüche

1. Verfahren zur Steuerung der Ausführung mindestens einer Funktion in einem Modul (335) zur drahtlosen Nahkommunikation eines mobilen Endgeräts (300), das dafür eingerichtet ist, Identifikationsmittel (310) aufzunehmen, wobei dieses Verfahren **dadurch gekennzeichnet ist, dass** es die folgenden Schritte umfasst:
- Senden (420) einer Informationsabfrage (RA2) von dem Modul zur drahtlosen Nahkommunikation an die Identifikationsmittel, wobei die Informationsabfrage auf die Erlangung mindestens einer die Identifikationsmittel kennzeichnenden Information abzielt;
- Empfangen (440) einer Antwort (RS2) auf die Informationsabfrage von den Identifikationsmitteln, wobei die Antwort mindestens eine die Identifikationsmittel kennzeichnende Information umfasst,;
- Authentifizieren (445) der Antwort durch das Modul zur drahtlosen Nahkommunikation; und,
- wenn die Antwort authentifiziert ist, Ausführen der mindestens einen Funktion als Reaktion auf die mindestens eine die Identifikationsmittel kennzeichnende Information.

2. Verfahren nach Anspruch 1, **dadurch gekennzeichnet, dass** es außerdem die folgenden Schritte umfasst:
- Empfangen (415) einer Authentifizierungsanforderung (RA1) mittels des Moduls zur drahtlosen Nahkommunikation; und,
- wenn die Antwort authentifiziert ist, Senden (450), mittels des Moduls zur drahtlosen Nahkommunikation, einer Autorisierung (RS1) der Authentifizierungsanforderung als Reaktion auf die mindestens eine die Identifikationsmittel kennzeichnende Information vor der Ausführung der mindestens einen Funktion.

3. Verfahren nach Anspruch 1 oder Anspruch 2, **dadurch gekennzeichnet, dass** die Informationsübertragung zwischen den Identifikationsmitteln und dem Modul zur drahtlosen Nahkommunikation zumindest teilweise über einen Mikroprozessor (305) der Einheit des mobilen Endgeräts erfolgt, wobei das Verfahren die folgenden Schritte umfasst:
- Senden (415) der Informationsabfrage an den Mikroprozessor, wobei der Mikroprozessor dafür eingerichtet ist, die Informationsabfrage an die Identifikationsmittel zu senden, und/oder
- Empfangen (440) der Antwort von dem Mikroprozessor, wobei der Mikroprozessor die Antwort von den Identifikationsmitteln empfangen hat.

4. Verfahren nach einem der vorhergehenden Ansprüche, **dadurch gekennzeichnet, dass** die Antwort oder/und die Autorisierung codiert oder fälschungssicher gemacht ist/sind, um authentifizierbar zu sein, ausgehend von einem privaten kryptographischen Schlüssel, der lokal in den Identifikationsmitteln oder in dem Modul zur drahtlosen Nahkommunikation gespeichert ist und die Antwort oder/und die Autorisierung codiert oder fälschungssicher macht, wobei die Codierung oder die Fälschungssicherung der Antwort oder/und der Autorisierung lokal in den Identifikationsmitteln oder in dem Modul zur drahtlosen Nahkommunikation erfolgt, wobei die Antwort oder/und die Autorisierung codiert oder fälschungssicher gemacht wird/werden.

5. Verfahren nach einem der vorhergehenden Ansprüche, **dadurch gekennzeichnet, dass** die mindestens eine Funktion die Aktualisierung der in dem Modul zur drahtlosen Nahkommunikation gespeicherten Daten oder die Autorisierung einer drahtlosen Kommunikation des Moduls zur drahtlosen Nahkommunikation mit einer externen Vorrichtung zum Ziel hat.

6. Verfahren nach einem der vorhergehenden Ansprüche, **dadurch gekennzeichnet, dass** zumindest einige der Kommunikationen zwischen den Identifikationsmitteln und dem Modul zur drahtlosen Nahkommunikation sichere Kommunikationen sind.

7. Verfahren nach einem der vorhergehenden Ansprüche, **dadurch gekennzeichnet, dass** die Informationsabfrage eine Angabe umfasst, die sich auf die mindestens eine Funktion bezieht.

8. Rechnerprogramm, Anweisungen umfassend, die für die Ausführung jedes der Schritte des Verfahrens nach einem der Ansprüche 1 bis 7 eingerichtet sind.

9. Informationsspeichermittel, gegebenenfalls austauschbar, teilweise oder vollständig von einem Rechner oder einem Mikroprozessor lesbar, Codeanweisungen eines Rechnerprogramms zur Ausführung jedes der Schritte des Verfahrens nach einem der Ansprüche 1 bis 7 umfassend.

10. Vorrichtung zur Steuerung der Ausführung mindestens einer Funktion in Mitteln (335) zur drahtlosen Nahkommunikation eines mobilen Endgeräts (300), das dafür eingerichtet ist, Identifikationsmittel (310) aufzunehmen, wobei diese Vorrichtung **dadurch gekennzeichnet ist, dass** sie die folgenden Mittel umfasst:
- Mittel zum Senden mindestens einer Informationsabfrage an die Identifikationsmittel, wobei die Informationsabfrage auf die Erlangung mindestens einer die Identifikationsmittel kennzeichnenden Information abzielt;
- Mittel zum Empfangen einer Antwort auf die Informationsabfrage von den Identifikationsmitteln, wobei die Antwort mindestens eine die Identifikationskarte kennzeichnende Information umfasst;
- Mittel zum Authentifizieren der Antwort; und
- Mittel zum Ausführen der mindestens einen Funktion als Reaktion auf die mindestens eine die Identifikationskarte kennzeichnende Information.

11. Vorrichtung nach Anspruch 10, **dadurch gekennzeichnet, dass** das mobile Endgerät einen Mikroprozessor umfasst, der von den Authentifizierungsmitteln und den Ausführungsmitteln verschieden ist.

12. Vorrichtung nach Anspruch 10 oder Anspruch 11, **dadurch gekennzeichnet, dass** sie außerdem die folgenden Mittel umfasst:
- Mittel zum Empfangen mindestens einer Authentifizierungsanforderung;
- Mittel zum Senden einer Autorisierung der Authentifizierungsanforderung als Reaktion auf die mindestens eine die Identifikationskarte kennzeichnende Information vor der Ausführung der mindestens einen Funktion; und
- Codier- oder Sicherungsmittel, die dafür eingerichtet sind, die Autorisation zu codieren oder fälschungssicher zu machen, derart, dass die Autorisation authentifizierbar ist.

13. Vorrichtung nach Anspruch 12, **dadurch gekennzeichnet, dass** sie außerdem nichtflüchtige Speichermittel zum Speichern von Authentifizierungsinformationen umfasst, die von den Codier- oder Sicherungsmitteln verwendet werden, um die Autorisation zu codieren oder fälschungssicher zu machen, wobei die Speichermittel dafür eingerichtet sind, außerdem Daten zu speichern, die ein Authentifzieren der Antwort ermöglichen.

14. Vorrichtung nach einem der Ansprüche 10 bis 13, **dadurch gekennzeichnet, dass** die Identifikationsmittel eine Abonnenten-Identifikationskarte für ein Mobiltelefonnetz sind.

15. Vorrichtung nach einem der Ansprüche 10 bis 14, **dadurch gekennzeichnet, dass** die Mittel zur drahtlosen Nahkommunikation mit der Norm ISO 14 443 konform sind.

16. Vorrichtung nach einem der Ansprüche 10 bis 15, **dadurch gekennzeichnet, dass** die Mittel zur drahtlosen Nahkommunikation fest in das mobile Endgerät integriert sind.
